# EUROPEAN PATENT SPECIFICATION

(11) **EP 1 273 230 B1**
(45) Date of publication and mention of the grant of the patent: **29.10.2008**
(21) Application number: 01919839.9
(22) Date of filing: 09.04.2001
(51) Int. Cl.: A01N 25/24, A01N 25/30

(54) **WETTING AGENT COMPOSITION FOR AGRICULTURAL CHEMICALS**
NETZMITTEL-ZUSAMMENSETZUNG FÜR AGROCHEMIKALIEN
COMPOSITION D'AGENTS MOUILLANTS POUR PRODUITS CHIMIQUES DESTINES A L'AGRICULTURE

(30) Priority: 10.04.2000 JP 2000107922
(43) Date of publication of application: 08.01.2003
(73) Proprietor: KAO CORPORATION, Tokyo 103-8210 (JP)
(72) Inventor: YAMAGUCHI, K. Kao Corporation, ResearchLabs., Wakayama-shi, Wakayama 640-8580 (JP); KURITA, K. Kao Corporation, Research Labs., Wakayama-shi, Wakayama 640-8580 (JP); HAYASHI, M. Kao Corporation, Osaka-shi, Osaka 550-0012 (JP)
(74) Representative: HOFFMANN EITLE
(86) International application number: PCT/JP2001/003047
(87) International publication number: WO 2001/076365

(56) References cited:
- EP-A- 0 498 785
- EP-A1- 0 131 762
- EP-A1- 0 853 883
- WO-A-95/16351
- JP-A- 2 306 902
- JP-A- 5 286 804
- JP-A- 9 278 605
- JP-A- 62 281 804
- JP-A- 63 239 204
- JP-A- 2000 001 404

## Description

### Field of the Invention

The present invention relates to an agrochemical spreader composition.

### Background Art

Agricultural chemicals such as insecticides, fungicides, plant-growth hormones or herbicides can produce their effects only after they are absorbed in plants or animals such as pest insects. However, wax-lipoids are secreted, feathery fibers grow thick or fine irregularities are present on the surfaces of many plants and on the other hand, the same layer as a keratin is present on the surface of a pest insect. All these materials have such qualities as to repel aqueous solutions of agricultural chemicals. The problem that no intended effect can be obtained even in the case of spraying agricultural chemicals therefore arises.

In light of this, in order to compensate this drawback, agrochemical spreaders including emulsifiable concentrates and water-dispersible powders are widely used in agricultural fields with the intention of improving the wet spreading ability (wettability and extendibility) of agricultural chemicals. The agrochemical spreader is used to obtain the aforementioned wet spreading ability by lowering surface tension by using a surfactant as its major component and is also an important auxiliary controlling physicochemical characteristics such as emulsification, dispersion, penetration, fixation, suspension or defoaming abilities in practical use.

As the agrochemical spreader, nonionic surfactants such as polyoxyethylene sorbitan ester, polyoxyethylene alkyl (or aryl) ether or polyoxyethylene fatty acid ester, anionic surfactants such as straight-chain alkylbenzene sulfonate, dialkylsulfosuccinate, lignin sulfonate or polynaphthyl sulfonate and high molecular compounds such as polyacrylates are conventionally known.

In order to improve the effect of the agrochemical spreader, it is considered to alter the material quality and composition of a surfactant which is a major component of the spreader. Alkylene oxide addition type nonionic surfactants in particular are considered to be effective for this purpose because the material qualities of these surfactants can be changed with ease by controlling the number of the addition mols of alkylene oxide and the like. There are descriptions that a specific alkylene oxide addition type nonionic surfactant is used for the agrochemical spreader in, for example, JP-A-6-329503, JP-A-9-278605 and JP-A-10-231202. Also, an agrochemical spreader composition comprising sorbitan fatty acid ester, polyoxyethylene alkyl ether and polyether modified silicone in a specific ratio is disclosed in JP-A-2000-1404.

Generally, because nonionic surfactants used for the agrochemical spreader have a relatively low melting point, many agrochemical spreaders using these nonionic surfactants are liquid materials. However, there is the case where nonuniformity and solidification of formulations are caused by the type and compounding amount of nonionic surfactant. Many agrochemical spreaders are compounded in agricultural formulations (liquid materials in general) and therefore, when such a solidification problem as aforementioned arises, a lot of time and labor are needed for heating and the workability is impaired.

WO 95/16351 A describes low-cost agriculturally acceptable surfactants which enhance the rainfastness of foliar-applied pesticidal and plant growth modifying agents. The surfactant compositions comprise an ethoxylated tertiary or secondary alcohol surfactant and an ethoxylated tertiary or quarternary alkyl amine surfactant. The content of these compounds ranges from 0.25-10.2 % for the alcohol surfactant and from 0.25-7.5 % for the alkyl amine surfactant.

EP 0131762 A describes surfactant compositions having low toxicity and low irritancy properties that are suitable for enhancing the herbicidal activity of glyphosate formulations. The surfactant compositions comprise 0.3-17.5 % by weight of water and 15.5-24.9 % by weight of a combination of surfactants, for instance, TWEEN80®, an ethoxylated sorbitan monooleate having 20 ethoxy units per sorbitan moiety.

### Disclosure of the Invention

It is an object of the present invention to provide an agrochemical spreader composition which has an excellent low-temperature stability and may be easily handled with maintaining the performance as an agrochemical spreader.

The present invention resides in the agrochemical spreader composition comprising a surfactant (A) having a melting point of 20 to 60^{°}C and a surfactant (B) having a melting point of not more than 0^{°}C in a total amount of not less than 50% by weight and water in an amount of 10 to 45% by weight.

At least one of the surfactants (A) and (B) is preferably a nonionic surfactant. The nonionic surfactant is preferably one type selected from the group consisting of a polyoxyalkylene alkyl ether, a polyoxyalkylene alkylphenyl ether, a polyoxyalkylene polyhydric alcohol fatty acid ester, a polyhydric alcohol fatty acid ester, a polyoxyalkylene alkylamine, an alkyl polyglycoside and a glycidyl ether.

As preferable examples, (A) is a polyoxyalkylene alkyl ether. Also, (B) is a polyoxyalkylene alkylamine. It is more preferably that (A) be a polyoxyalkylene alkyl ether and (B) be a polyoxyalkylene alkylamine.

(A) or (B) is preferably a compound which is positively electrified.

The ratio by weight of the surfactant (A) to the surfactant (B), (A)/(B), is preferably 2/1 to 1/2. The surfactant (A) may be contained in an amount of 30 to 50% by weight.

The present invention also provides a use of the above composition as an agrochemical spreader. Further, the present invention provides a method of spreading an agricultural chemical, the method comprising adding the above composition to an agricultural chemical and bringing the agricultural chemical into contact with a subject. The present invention resides in an agrochemical composition comprising the above spreader composition and an agricultural chemical.

The spreader composition of the present invention may be used efficiently to spread an agricultural chemical on subjects such as plants, animals such as pest insects and plant disease fungi such as bacteria or fungi. The spreading of an agricultural chemical can improve the spreading ability (wettability and extendibility) and penetrability of the agricultural chemical.

When the composition contains particularly a compound, such as polyoxyalkylene alkylamine, which is positively electrified, the permeability through a cell membrane is also improved. Thus, the effect of an agricultural chemical is improved whereby the agricultural chemical can be made to act more efficiently.

### Embodiment of the Invention

As the surfactants (A) and (B) according to the present invention, nonionic surfactants, cationic surfactants, amphoteric surfactants and anionic surfactants may be included. At least one of the surfactants (A) and (B) is preferably a nonionic surfactant. As the nonionic surfactant, one or more types selected from polyoxyalkylene alkyl ethers, polyoxyalkylene alkylphenyl ethers, polyoxyalkylene polyhydric alcohol fatty acid esters, polyhydric alcohol fatty acid esters, polyoxyalkylene alkylamines, alkyl polyglycosides and glycidyl ethers are preferable. Examples of polyhydric alcohols constituting a nonionic surfactant include divalent alcohols such as ethyleneglycol, 1,2-propylene glycol, 1,3-propyleneglycol, 1,4-butanediol, 2,3-butanediol, 1,5-pentanediol, 1,6-hexanediol, 1,8-octanediol, neopentyl glycol or 2-methyl-1,3-propanediol, trivalent alcohols such as glycerol, trimethylolpropane, trimethylolethane, 1,2,6-hexanetriol or sorbide, tetravalent alcohols such as pentaerythritol, erythritol, sorbitan, diglycerol or ditrimethylolpropane, pentavalent alcohols such as fructose, glucose, galactose, mannose, xylitol or triglycerol, hexavalent alcohols such as sorbitol, mannitol, inositol, tetraglycerol or dipentaerythritol, octavalent alcohols such as sucrose, maltose, lactose or hexaglycerol and dodecavalent alcohols such as decaglycerol or polyglycerols having more hydroxyl groups than these alcohols.

In these compounds, those having a desired melting point can be obtained by changing the structures of components, such as the number of the carbons of an alkyl group, the state as to whether unsaturated bonds or branched structures are present or not and the type and the number of addition mols of alkylene oxide. Examples of the surfactant (A) include:
(A1) polyoxyethylene [number of average addition mols of ethylene oxide (hereinafter referred to as EOp) = 9 to 45] lauryl ether;
(A2) polyoxyethylene (EOp = 5 to 10) stearyl ether;
(A3) polyoxyethylene (EOp = 13 to 33) oleyl ether;
(A4) polyoxyethylene (EOp = 18 to 28) nonylphenyl ether;
(A5) polyoxyethylene (EOp = 40 to 80) hydrogenated castor oil;
(A6) polyoxyethylene (EOp = 15) oleylamine;
(A7) polyoxyethylene (EOp = 2) stearylamine;
(A8) polyoxyethylene (EOp = 61) styrenated phenyl ether;
(A9) oleic acid monoglyceride; and
(A10) polyoxyethylene (EOp = 99) monostearate. As the surfactant (A), a polyoxyethylene alkyl ether of which the alkyl group has 12 to 18 carbon atoms and which has an EOp of 9 to 13 is desirable.

Also, examples of the surfactant (B) include;
(B1) polyoxyethylene (EOp = 5 to 7) secondary alkyl (11 to 14 carbon atoms) ether;
(B2) polyoxyethylene (EOp = 8 to 9) octylphenyl ether;
(B3) polyoxyethylene (EOp = 3 to 8) nonylphenyl ether;
(B4) polyoxyethylene (EOp = 10 to 20) polyhydric alcohol fatty acid (hydrogenated castor oil composition) ester;
(B5) sorbitan mono-, di- or tri-oleate;
(B6) polyoxyethylene (EOp = 10 to 20) sorbitan monooleate; and
(B7) polyoxyethylene (EOp = 2 to 5) coconut amine. As the surfactant (B), a polyoxyethylene alkylamine of which the alkyl group has 12 to 14 carbon atoms and which has an EOp of 2 to 5 is desirable.

The agrochemical spreader composition of the present invention contains the surfactants (A) and (B) in a total amount of not less than 50% by weight, more preferably 60 to 80% by weight and still more preferably 70 to 80% by weight. Also, in the present invention, the ratio by weight of the surfactant (A) to the surfactant (B), (A)/(B), is 2/1 to 1/2 and particularly 1.5/1 to 1/1.5. Also, it is preferable to contain the surfactant (A) in an amount of preferably 30 to 50% by weight, more preferably 30 to 45% by weight and particularly preferably 35 to 45% by weight.

The agrochemical spreader composition of the present invention contains water in an amount of 10 to 45% by weight, preferably 10 to 40% by weight, more preferably 10 to 30% by weight and particularly preferably 10 to 20% by weight. The above surfactant (A) is a component for improving wettability. It, however, has a high melting point and there is therefore a tendency to impair low-temperature stability when it is used in combination with the surfactant (B). However, if water besides the surfactants (A) and (B) is present in an amount falling in the above range, the low-temperature stability of the composition is improved. It is to be noted that although an agrochemical spreader is occasionally diluted with water and mixed with an agrochemical formulation, the water contained in the composition of the present invention is discriminated from the water used for dilution in use. The agrochemical spreader composition of the present invention like this is a transparent liquid at 15^{°}C. Here, the transparent means that the composition is uniform and has no turbidity found by visual observation.

The agrochemical spreader composition of the present invention may contain a sticking agent such as carboxymethyl cellulose or casein and a dispersing agent such as a naphthalenesulfonic acid formaldehyde condensate or lignin sulfonate.

The agrochemical spreader composition of the present invention may be used for agrochemical formulations containing various agrochemical active components. Examples of the agrochemical active component include herbicides such as a phenoxy type herbicide, diphenyl ether type herbicide, carbamate type herbicide, acid amide type herbicide, urea type herbicide, sulfonylurea type herbicide, triazine type herbicide, diazine type herbicide, diazole type herbicide, bipipyridium type herbicide, dinitroaniline type herbicide, aromatic carboxylic acid type herbicide, fatty acid type herbicide, organic phosphorous type herbicide or amino acid type herbicide; fungicides such as a copper fungicide, inorganic fungicide, organic sulfur fungicide, organic chlorine type fungicide, organic phosphorous type fungicide, benzimidazole type fungicide, acid amide type fungicide, ergosterol biosynthesis inhibitor or antibiotic fungicide; and insecticides such as an organic phosphorous type insecticide, carbamate type insecticide, pyrothroid type insecticide, nereistoxin type insecticide or insect growth control agent, which are all described in "AGROCHEMICAL HANDBOOK, 1994 Edition" (Corporation Japan Plant Protection Association, December 21, 1994). The composition of the present invention is preferably used for, particularly, agrochemical formulations containing an amino acid herbicide as an active component.

The agrochemical spreader composition of the present invention is used for the production of agrochemical formulations containing agrochemical active components. Specifically, the agrochemical spreader composition is subjected to a method of the production of the agrochemical formulations which method has a step of adding the composition of the present invention in any one of production steps. In this case, the composition of the present invention may be compounded (internally added) as one of components constituting the agrochemical formulation in any one of a series of steps for the production of the agrochemical formulation or may be further compounded (externally added) in the agrochemical formulation prepared separately. The internal addition is preferable. In any case, the compound of the present invention is preferably compounded in the agrochemical formulation such that the total amount of the surfactants (A) and (B) in the agrochemical formulation is preferably 10 to 50% by weight, more preferably 20 to 40% by weight and particularly preferably 25 to 35% by weight.

### Effect of the Invention

According to the present invention, a liquid agrochemical spreader composition having low-temperature stability is obtained.

### Examples

### Example 1

Agrochemical spreader compositions having percentage compositions shown in Table 1 were prepared. The outward appearance of each composition after stored at 10°C for 5 days was observed according to the following standard. The transparent melting point (according to JIS K 0064) and freezing point (according to JIS K 0065) of the composition were also measured. The results are shown in Table 1.

### <Outward appearance after stored at low temperatures>

○: Uniform and transparent.
Δ: Turbid.
×: Separated or solidified.

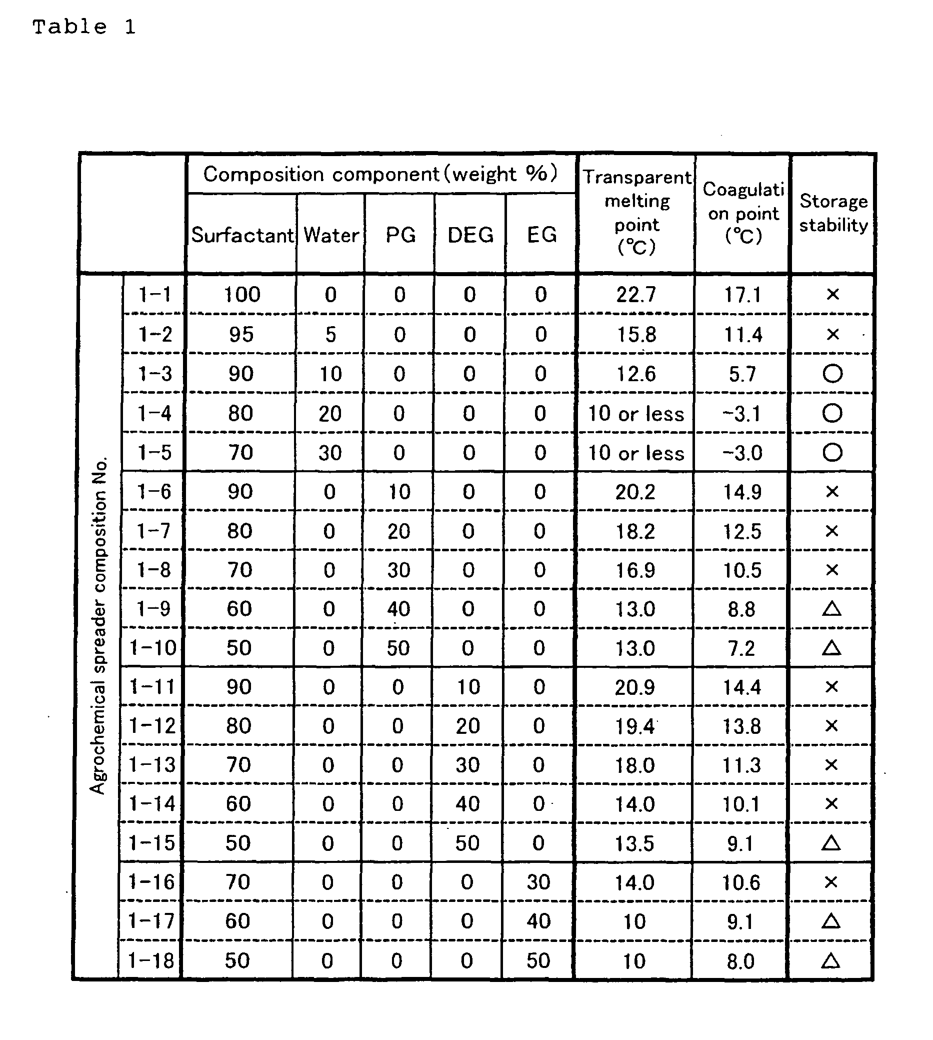

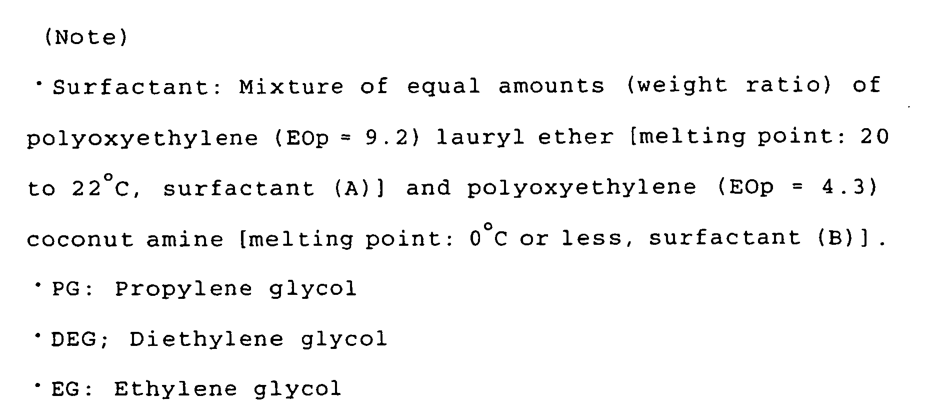

### Example 2

Agrochemical spreader compositions having percentage compositions shown in Table 2 were prepared. The outward appearance of each composition after stored at 10°C for 7 days was evaluated in the same manner as in Example 1. The results are shown in Table 2.

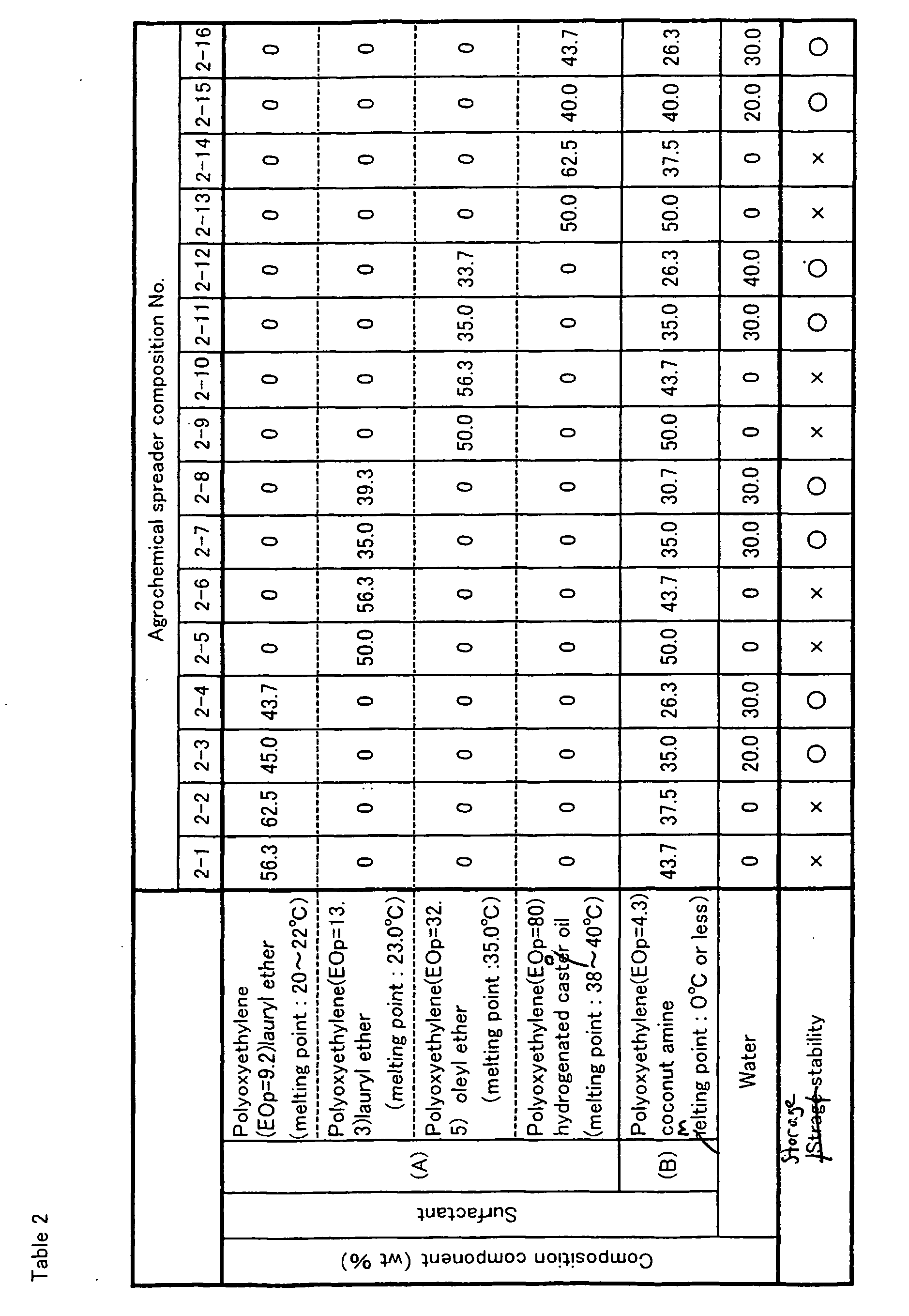

### Example 3

Agrochemical spreader compositions having percentage compositions shown in Table 3 were prepared. The outward appearance of each composition after stored at 15^{°}C for one day was evaluated. The results are shown in Table 3.

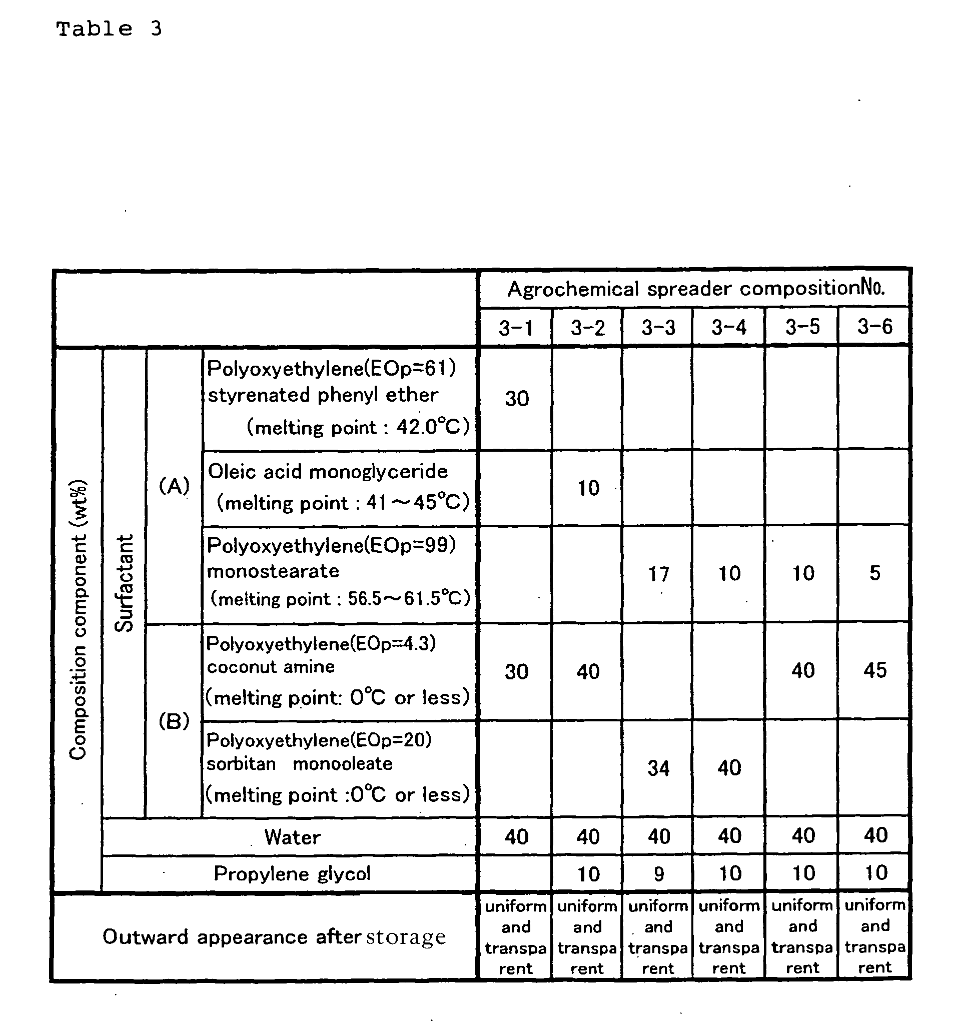

## Claims

1. An agrochemical spreader composition comprising a surfactant (A) having a melting point of 20 to 60 °C and a surfactant (B) having a melting point of not more than 0 °C in a total amount of not less than 50 % by weight and water in an amount of 10 to 45 % by weight.

2. A composition according to Claim 1, wherein at least any one of the surfactants (A) and (B) is preferably a non-ionic surfactant.

3. A composition according to Claim 2, wherein the surfactant (A) is selected from the group consisting of a polyoxyalkylene alkyl ether, a polyoxyalkylene alkylphenyl ether, a polyoxyalkylene polyhydric alcohol fatty acid ester, a polyhydric alcohol fatty acid ester, a polyoxyalkylene alkylamine, an alkyl polyglycoside and a glycidyl ether.

4. A composition according to Claim 2, wherein the surfactant (B) is selected from the group consisting of a polyoxyalkylene alkyl ether, a polyoxyalkylene alkylphenyl ether, a polyoxyalkylene polyhydric alcohol fatty acid ester, a polyhydric alcohol fatty acid ester, a polyoxyalkylene alkylamine, an alkyl polyglycoside and a glycidyl ether.

5. A composition according to Claims 3 or 4, wherein (A) is a polyoxyalkylene alkyl ether.

6. A composition according to Claims 3 or 4, wherein (B) is a polyoxyalkylene alkylamine.

7. The composition according to Claims 2 or 3, wherein surfactant (A) is selected from the list consisting of
(A1) polyoxyethylene lauryl ether,
wherein EOp = 9 to 45;
(A2) polyoxyethylene stearyl ether,
wherein EOp = 5 to 10;
(A3) polyoxyethylene oleyl ether,
wherein EOp = 13 to 33;
(A4) polyoxyethylene nonylphenyl ether,
wherein EOp = 18 to 28;
(A5) polyoxyethylene hydrogenated castor oil,
wherein EOp = 40 to 80;
(A6) polyoxyethylene oleylamine,
wherein EOp = 15;
(A7) polyoxyethylene stearylamine,
wherein EOp = 2;
(A8) polyoxyethylene styrenated phenyl ether;
wherein EOp = 61;
(A9) oleic acid monoglyceride; and
(A10) polyoxyethylene monostearate,
wherein EOp = 99,
wherein EOp is the number average addition mols of ethylene oxide.

8. The composition according to Claims 2, 3, 5 and 7, wherein surfactant (B) is selected from the list consisting of
(B1) polyoxyethylene secondary alkyl (11 to 14 carbon atoms) ether,
wherein EOp = 5 to 7;
(B2) polyoxyethylene octylphenyl ether,
wherein EOp = 8 to 9;
(B3) polyoxyethylene nonylphenyl ether,
wherein EOp = 3 to 8;
(B4) polyoxyethylene polyhydric alcohol fatty acid (hydrogenated castor oil composition) ester,
wherein EOp = 10 to 20;
(B5) sorbitan mono-, di-, tri-oleate;
(B6) polyoxyethylene sorbitan monooleate,
wherein Eop = 10 to 20; and
(B7) polyoxyethylene coconut amine,
wherein EOp = 2 to 5,
wherein EOp is the number average addition mols of ethylene oxide.

9. The composition according to any of claims 1 to 8, wherein both surfactant (A) and surfactant (B) are non-ionic surfactants.

10. A composition according to Claim 1, wherein (A) is a polyoxyalkylene alkyl ether and (B) is a polyoxyalkylene alkylamine.

11. A composition according to any of Claims 1-10, wherein the ratio by weight of the surfactant (A) to the surfactant (B), (A)/(B), is 2/1 to 1/2.

12. A composition according to any of Claims 1-11, wherein the surfactant (A) is contained in an amount of 30 to 50 % by weight.

13. The composition according to any one of claims 1 to 12, being uniform and transparent at 15 °C.

14. A use of the composition according to any of Claims 1-13 as an agrochemical spreader.

15. A method of spreading an agricultural chemical, the method comprising adding the composition according to any of claims 1-13 to an agricultural chemical and bringing the agricultural chemical into contact with a subject.

16. An agrochemical composition comprising the spreader composition according to any of Claims 1-13 and an agricultural chemical.

## Patentansprüche

1. Agrochemische Benetzungsmittelzusammensetzung umfassend ein Tensid (A) mit einem Schmelzpunkt von 20 bis 60°C und ein Tensid (B) mit einem Schmelzpunkt von nicht mehr als 0°C in einer Gesamtmenge von nicht weniger als 50 Gew.% und Wasser in einer Menge von 10 bis 45 Gew.%.

2. Zusammensetzung gemäß Anspruch 1, wobei wenigstens eines der Tenside (A) und (B) vorzugsweise ein nicht-ionisches Tensid ist.

3. Zusammensetzung gemäß Anspruch 2, wobei das Tensid (A) ausgewählt ist aus der Gruppe bestehend aus einem Polyoxyalkylenalkylether, einem Polyoxyalkylenalkylphenylether, einem Fettsäureester eines mehrbasigen Polyoxyalkylenalkohols, einem Fettsäureester eines mehrbasigen Alkohols, einem Polyoxyalkylenalkylamin, einem Alkylpolyglycosid und einem Glycidylether.

4. Zusammensetzung gemäß Anspruch 2, wobei das Tensid (B) ausgewählt ist aus der Gruppe bestehend aus einem Polyoxyalkylenalkylether, einem Polyoxyalkylenalkylphenylether, einem Fettsäureester eines mehrbasigen Polyoxyalkylenalkohols, einem Fettsäureester eines mehrbasigen Alkohols, einem Polyoxyalkylenalkylamin, einem Alkylpolyglycosid und einem Glycidylether.

5. Zusammensetzung gemäß den Ansprüchen 3 order 4, wobei (A) ein Polyoxyalkylenalkylether ist.

6. Zusammensetzung gemäß den Ansprüchen 3 oder 4, wobei (B) ein Polyoxyalkylenalkylamin ist.

7. Zusammensetzung gemäß den Ansprüchen 2 oder 3, wobei das Tensid (A) ausgewählt ist aus der Liste bestehend aus
(A1) Polyoxyethylenlaurylether,
wobei EOp = 9 bis 45;
(A2) Polyoxyethylenstearylether,
wobei EOp = 5 bis 10;
(A3) Polyoxyethylenoleylether,
wobei EOp = 13 bis 33;
(A4) Polyoxyethylennonylphenylether,
wobei EOp = 18 bis 28;
(A5) hydriertes Polyoxyethylen-Rizinusöl,
wobei EOp = 40 bis 80;
(A6) Polyoxyethylenoleylamin,
wobei EOp = 15;
(A7) Polyoxyethylenstearylamin,
wobei EOp = 2;
(A8) Styrol-substituierter Polyoxyethylenphenylether,
wobei EOp = 61;
(A9) Oleinsäuremonoglycderid und
(A10) Polyoxyethylenmonostearat,
wobei EOp = 99;
wobei EOp die zahlenmittlere zugesetzte Molzahl des Ethylenoxids ist.

8. Zusammensetzung gemäß den Ansprüchen 2, 3, 5 und 7, wobei das Tensid (B) ausgewählt ist aus der Liste bestehend aus
(B1) sekundärem Polyoxyethylenalkyl-(11 bis 14 Kohlenstoffatome)-ether,
wobei EOp = 5 bis 7;
(B2) Polxoxyethylenoctylphenylether,
wobei EOp = 8 bis 9;
(B3) Polyoxyethylennonylphenylether,
wobei EOp = 3 bis 8;
(B4) Fettsäure-(hydrierte Rizinusölzusammensetzung)-ester eines mehrbasigen Polyoxyethylenalkohols,
wobei EOp = 10 bis 20;
(B5) Sorbitanmono-, -di-, -tri-oleat;
(B6) Polyoxyethylensorbitanmonooleat,
wobei EOp = 10 bis 20 und
(B7) Polyoxyethylenkokosamin,
wobei EOp = 2 bis 5,
wobei EOp die zahlenmittlere zugesetzte Molzahl des Ethylenoxids ist.

9. Zusammensetzung gemäß einem der Ansprüche 1 bis 8, wobei sowohl Tensid (A) als auch Tensid (B) ein nicht-ionisches Tensid ist.

10. Zusammensetzung gemäß Anspruch 1, wobei (A) ein Polyoxyalkylenalkylether ist und (B) ein Polyoxyalkylenalkylamin ist.

11. Zusammensetzung gemäß einem der Ansprüche 1 bis 10, wobei das Gewichtsverhältnis von Tensid (A) zu Tensid (B), (A)/(B), 2/1 bis 1/2 beträgt.

12. Zusammensetzung gemäß einem der Ansprüche 1 bis 11, wobei das Tensid (A) in einer Menge von 30 bis 50 Gew.% enthalten ist.

13. Zusammensetzung gemäß einem der Ansprüche 1 bis 12, die bei 15°C gleichförmig und transparent ist.

14. Verwendung der Zusammensetzung gemäß einem der Ansprüche 1 bis 13 als agrochemisches Benetzungsmittel.

15. Verfahren zum Benetzen einer Agrarchemikalie umfassend das Zusetzen der Zusammensetzung gemäß einem der Ansprüche 1 bis 13 zu einer Agrarchemikalie und Inkontaktbringen der Agrarchemikalie mit einem Objekt.

16. Agrarchemische Zusammensetzung umfassend die Benetzungsmittelzusammensetzung gemäß einem der Ansprüche 1 bis 13 und eine Agrarchemikalie.

## Revendications

1. Composition de dispersant agrochimique comprenant un agent tensioactif (A) possédant un point de fusion de 20 à 60 °C et un agent tensioactif (B) possédant un point de fusion de pas plus de 0 °C à raison d'une quantité totale de pas moins de 50 % en poids et de l'eau à raison d'une quantité de 10 à 45 % en poids.

2. Composition selon la revendication 1, dans laquelle au moins l'un quelconque des agents tensioactifs (A) et (B) est de préférence un agent tensioactif non ionique.

3. Composition selon la revendication 2, dans laquelle l'agent tensioactif (A) est choisi parmi le groupe consistant en un éther alkylique de polyoxyalkylène, un éther alkylphénylique de polyoxyalkylène, un ester d'acide gras d'alcool polyhydrique de polyoxyalkylène, un ester d'acide gras d'alcool polyhydrique, une polyoxyalkylène alkylamine, un alkyl polyglycoside et un éther glycidylique.

4. Composition selon la revendication 2, dans laquelle l'agent tensioactif (B) est choisi parmi le groupe consistant en un éther alkylique de polyoxyalkylène, un éther alkylphénylique de polyoxyalkylène, un ester d'acide gras d'alcool polyhydrique de polyoxyalkylène, un ester d'acide gras d'alcool polyhydrique, une polyoxyalkylène alkylamine, un alkyl polyglycoside et un éther glycidylique.

5. Composition selon les revendications 3 ou 4, dans laquelle (A) est un éther alkylique de polyoxyalkylène.

6. Composition selon les revendications 3 ou 4, dans laquelle (B) est une polyoxyalkylène alkylamine.

7. Composition selon les revendications 2 ou 3, dans laquelle l'agent tensioactif (A) est choisi parmi la liste consistant en
(A1) un éther laurylique de polyoxyéthylène,
dans lequel EOp = 9 à 45 ;
(A2) un éther stéarylique de polyoxyéthylène,
dans lequel EOp = 5 à 10 ;
(A3) un éther oléylique de polyoxyéthylène,
dans lequel EOp = 13 à 33 ;
(A4) un éther nonylphénylique de polyoxyéthylène,
dans lequel EOp = 18 à 28 ;
(A5) une huile de ricin hydrogénée de polyoxyéthylène,
dans laquelle EOp = 40 à 80 ;
(A6) une polyoxyéthylène oléylamine,
dans laquelle EOp = 15 ;
(A7) une polyoxyéthylène stéarylamine,
dans laquelle EOp = 2 ;
(A8) un éther phénylique styréné de polyoxyéthylène,
dans lequel EOp = 61 ;
(A9) le monoglycéride de l'acide oléique ; et
(A10) un monostéarate de polyoxyéthylène,
dans lequel EOp = 99,
dans lesquels EOp représente les moles d'addition moyennes en nombre d'oxyde d'éthylène.

8. Composition selon les revendications 2, 3, 5 et 7, dans laquelle l'agent tensioactif (B) est choisi parmi la liste consistant en
(B1) un éther d'alkyle secondaire (11 à 14 atomes de carbone) de polyoxyéthylène,
dans lequel EOp = 5 à 7 ;
(B2) un éther octylphénylique de polyoxyéthylène,
dans lequel EOp = 8 à 9 ;
(B3) un éther nonylphénylique de polyoxyéthylène,
dans lequel EOp = 3 à 8 ;
(B4) un ester d'acide gras (composition d'huile de ricin hydrogénée) d'alcool polyhydrique de polyoxyéthylène,
dans laquelle EOp = 10 à 20 ;
(B5) un mono-, di-, tri-oléate de sorbitan ;
(B6) un monooléate de sorbitan de polyoxyéthylène
dans lequel EOp = 10 à 20 ; et
(B7) une amine de noix de coco de polyoxyéthylène
dans laquelle EOp = 2 à 5 ; et
dans lesquels EOp représente les moles d'addition moyennes en nombre d'oxyde d'éthylène.

9. Composition selon l'une quelconque des revendications 1 à 8, dans laquelle à la fois l'agent tensioactif (A) et l'agent tensioactif (B) sont des agents tensioactifs non ioniques.

10. Composition selon la revendication 1, dans laquelle (A) est un éther alkylique de polyoxyalkylène et (B) est une polyoxyalkylène alkylamine.

11. Composition selon l'une quelconque des revendications 1 à 10, dans laquelle le rapport en poids de l'agent tensioactif (A) à l'agent tensioactif (B), (A)/(B), va de 2/1 à 1/2.

12. Composition selon l'une quelconque des revendications 1 à 11, dans laquelle l'agent tensioactif (A) est contenu à raison d'une quantité de 30 à 50 % en poids.

13. Composition selon l'une quelconque des revendications 1 à 12, étant uniforme et transparente à 15 °C.

14. Utilisation de la composition selon l'une quelconque des revendications 1 à 13 en tant que dispersant agrochimique.

15. Procédé consistant à disperser un produit chimique destiné à l'agriculture, le procédé comprenant d'ajouter la composition selon l'une quelconque des revendications 1 à 13 à un produit chimique destiné à l'agriculture et à amener le produit chimique destiné à l'agriculture en contact avec un sujet.

16. Composition agrochimique comprenant la composition de dispersant selon l'une quelconque des revendications 1 à 13 et un produit chimique destiné à l'agriculture.
